(19) Europäisches Patentamt / European Patent Office / Office européen des brevets

(11) **EP 1 448 674 B1**

(12) **FASCICULE DE BREVET EUROPEEN**

(45) Date de publication et mention
de la délivrance du brevet:
**07.01.2009 Bulletin 2009/02**

(21) Numéro de dépôt: **02803439.5**

(22) Date de dépôt: **19.11.2002**

(51) Int Cl.:
***C08G 77/12*** *(2006.01)*

(86) Numéro de dépôt international:
**PCT/FR2002/003952**

(87) Numéro de publication internationale:
**WO 2003/044084 (30.05.2003 Gazette 2003/22)**

(54) **RETICULANT POUR UNE COMPOSITION SILICONE RETICULABLE A BASSE TEMPERATURE A BASE D'UNE HUILE SILICONE HYDROGENEE COMPRENANT DES MOTIFS Si-H EN BOUT DE CHAINE ET DANS LA CHAINE**

VERNETZER FÜR BEI NIEDRIGER TEMPERATUR VERNETZBARE SILIKONZUSAMMENSETZUNG AUF BASIS EINES WASSERSTOFF-ENTHALTENDEN SILIKONÖLS MIT SIH-GRUPPEN IN DER KETTE UND ENDGRUPPE

CROSSLINKING AGENT FOR A LOW-TEMPERATURE CROSSLINKABLE SILICONE COMPOSITION BASED ON A HYDROGENATED SILICONE OIL COMPRISING SI-H UNITS AT THE CHAIN END AND IN THE CHAIN

(84) Etats contractants désignés:
**AT BE BG CH CY CZ DE DK EE ES FI FR GB GR IE IT LI LU MC NL PT SE SK TR**

(30) Priorité: **20.11.2001 FR 0114996**

(43) Date de publication de la demande:
**25.08.2004 Bulletin 2004/35**

(73) Titulaire: **Bluestar Silicones France
69486 Lyon Cedex 03 (FR)**

(72) Inventeurs:
- **BENAYOUN, Jean-Paul**
  **F-69006 Lyon (FR)**
- **DHALER, Didier**
  **F-69160 Tassin (FR)**
- **KIEFFER, Jacques**
  **F-01700 Neyron (FR)**
- **WHITE, John**
  **F-69380 Chessy les Mines (FR)**

(56) Documents cités:
EP-A- 0 523 660          EP-A- 1 004 632
FR-A- 2 704 553          US-A- 5 942 591

**Description**

Le domaine de l'invention est celui des compositions silicones réticulables ou réticulées, susceptibles d'être utilisées, notamment, pour former un revêtement ou film hydrofuge et anti-adhérent pour support fibreux ou non, par exemple en papier ou analogue, ou bien encore en polymère naturel ou synthétique.

Plus précisément, l'invention se rapporte aux compositions silicones du type de celles comprenant :

des polyorganosiloxanes (POS) fonctionnalisés porteurs, sur une même molécule ou non de motifs Si-H et Si-IE avec IE représentant un groupement comportant au moins une insaturation -éthylénique, de préférence vinylique ; les motifs Si-H étant susceptibles de réagir avec les motifs Si-IE par polyaddition ;
un catalyseur métallique approprié de préférence platinique ;
éventuellement au moins un système modulateur d'adhérence, par exemple à base de résine silicone comprenant des motifs siloxyles Q: $(SiO_{4/2})$ et/ou T: $(RSiO_{3/2})$ ;
éventuellement d'autres additifs (charges , accélérateurs , inhibiteurs , pigments, tensioactifs...).

L'invention concerne également la préparation de ce type de compositions silicones.

L'invention concerne également les procédés de fabrication d'articles en silicone réticulé, notamment des revêtements e.g. hydrofuges et/ou anti-adhérents pour supports souples fibreux ou non (papier ou film polymère), à partir des compositions sus-visées.

Par exemple, ces compositions silicones liquides sont appliquées sur les films supports dans des dispositifs industriels d'enduction comportant des cylindres fonctionnant à très grande vitesse (par exemple 600 m/min). Il est clair que dans ces procédures d'enduction à très grande vitesse, la viscosité de la composition silicone liquide d'enduction doit être minutieusement adaptée aux conditions opératoires d'enduction.

Les compositions silicones liquides d'enduction auxquelles on s'intéresse plus particulièrement dans le cadre de l'invention sont sans solvant.

Selon une variante, la phase silicone de ces compositions silicones liquides d'enduction, peut être diluée dans un solvant. Selon une autre variante plus avantageuse notamment pour des raisons d'hygiène et de sécurité, la composition silicone liquide est une dispersion/émulsion aqueuse.

En pratique, le taux de dépôt de silicone anti-adhérent est compris entre 0,1 et 2 de préférence 0,3 et 1 $g/m^2$, ce qui correspond à des épaisseurs de l'ordre du micromètre.

Une fois appliquée sur le support souple, la composition silicone réticule pour former un revêtement solide en silicone (e.g. élastomère) anti-adhérent et/ou hydrofuge.

Compte tenu des cadences industrielles d'enduction à très haute vitesse, la cinétique de réticulation doit être instantanée et la réticulation doit être correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du film silicone anti-adhérent peut notamment se faire au travers du dosage des composés extractibles non réticulés, dont la quantité doit être la plus réduite possible.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off", qui consiste à frotter la surface du revêtement avec un doigt et à mesurer le nombre de passages successifs qui conduisent à une dégradation du revêtement.

Il importe également que ces compositions silicones d'enduction, réticulables par hydrosilylation e.g. ≡ SiH / ≡ SiVi, aient une durée de vie à température ambiante la plus longue possible, lorsqu'elles sont sous forme de bain d'enduction dans les machines industrielles d'enduction.

Les supports souples revêtus d'un film silicone anti-adhérent peuvent être par exemple:

- un ruban adhésif dont la face interne est enduite d'une couche d'adhésif sensible à la pression et dont la face externe comporte le revêtement silicone anti-adhérent ;
- ou un papier ou un film polymère de protection de la face adhésive d'un élément autocollant ou adhésif sensible à la pression ;
- ou un film polymère du type polychlorure de vinyle (PVC), PolyPropylène, Polyéthylène ou PolyEthylèneTéréphtalate.

Dans le cas de systèmes silicones liquides sans solvants réticulant par polyaddition (Si-H/Si-alcényle-Vi-), la réticulation est effectuée sous activation thermique. Ces conditions réactionnelles ne conviennent pas à certains supports thermosensibles tels que ceux comprenant du polyéthylène (PE), comme par exemple les films en PE ou les papiers couchés avec du PE, ou ceux du type papiers imprimables thermiquement. Ces supports thermosensibles ne supportent pas d'être chauffés à des températures supérieures à 90°C. Toute la difficulté est donc d'obtenir, pour ces supports thermosensibles, une réticulation correcte à basse température, par exemple inférieure ou égale à 110°C (85-90°C).

De manière générale, est déjà divulguée, l'utilisation de réticulants de type de ceux comportant des motifs siloxy : diméthylhydrogénosiloxy (M'), méthylhydrogénosiloxy (D'), diméthylsiloxy (D) et triméthylsiloxy (M), pour des compositions silicones liquides réticulables par polyaddition (≡SiH/SiVinyle), pour former des revêtements anti-adhérents sur des supports souples (papiers couchés ou non, films polymères...).

Il en est ainsi dans la demande de brevet EP-A-0 523 660 qui décrit des compositions silicones réticulables en quelques secondes à des températures inférieures à 100°C et comportant des résines POS =Si-Vi en réseau (non linéaires) et des réticulants POS ≡SiH de type MD', MDM'. Il n'est nullement montré dans ce document que la réticulation des films silicones obtenus est correcte. Le taux d'extractibles n'est pas mesuré dans les exemples.

Il ne s'agit pas dans l'EP-A-0 523 660 de réticulant POS ≡SiH particulier conférant des propriétés avantageuses au revêtement réticulé, en termes de taux d'extractibles réduit et de durée de stabilité du bain de composition silicone liquide d'enduction, notamment.

Dans ce contexte, la présente invention a pour objectif essentiel de proposer une nouvelle utilisation de POS ≡SiH particuliers à titre de réticulants dans des compositions silicones liquides d'enduction, réticulables en revêtement anti-adhérent et/ou hydrofuge pour support souple, à basse température (≤ à 110°C, de préférence ≤ à 100°C, e.g. de l'ordre de 85/90°C), de manière instantanée et en conduisant à des revêtements silicones réticulés de très bonne qualité, caractérisés par des taux d'extractibles réduits.

Un autre objectif essentiel de l'invention est de proposer une nouvelle utilisation de POS ≡SiH particuliers à titre de réticulants dans des compositions silicones liquides d'enduction, réticulables en revêtement anti-adhérent et/ou hydrofuge pour support souple, à basse température, de manière instantanée tout en présentant de longues durées de vie en bain, à température ambiante.

Un autre objectif essentiel de l'invention est de proposer une nouvelle utilisation de POS ≡SiH particuliers à titre de réticulants dans des compositions silicones liquides d'enduction, réticulables en revêtement anti-adhérent et/ou hydrofuge, pour support souple, à basse température, de manière instantanée et conduisant à des revêtements silicones réticulés correctement et possédant des propriétés d'anti-adhérence tout à fait satisfaisantes.

Un autre objectif essentiel de l'invention est de proposer une nouvelle utilisation de POS ≡SiH particuliers à titre de réticulants dans des compositions silicones liquides d'enduction, réticulables en revêtement anti-adhérent et/ou hydrofuge pour support souple, à basse température, de manière instantanée et conduisant à des revêtements silicones réticulés correctement et possédant des propriétés d'accrochage, tout à fait satisfaisantes.

Un autre objectif essentiel de l'invention est de proposer une nouvelle utilisation de POS ≡SiH particuliers à titre de réticulants dans des compositions silicones liquides d'enduction, réticulables en revêtement anti-adhérent et/ou hydrofuge pour support souple, à basse température, de manière instantanée et conduisant à des revêtements silicones réticulés correctement et possédant des propriétés mécaniques, tout à fait satisfaisantes.

Un autre objectif essentiel de l'invention est de proposer une nouvelle utilisation de POS ≡SiH particuliers à titre de réticulants dans des compositions silicones liquides d'enduction, réticulables en revêtement anti-adhérent et/ou hydrofuge pour support souple, à basse température, de manière instantanée et conduisant à des revêtements silicones réticulés correctement et possédant des propriétés d'hydrofugation, tout à fait satisfaisantes.

Un autre objectif essentiel de l'invention est de proposer une nouvelle composition silicone liquide d'enduction, réticulable en revêtement anti-adhérent et/ou hydrofuge pour support souple, à basse température, de manière instantanée, cette composition étant en outre dotée des mêmes qualités que celles mentionnées ci-dessus pour l'utilisation.

Un autre objectif essentiel de l'invention est de proposer une nouvelle composition silicone liquide d'enduction, réticulable en revêtement anti-adhérent et/ou hydrofuge pour support souple, à basse température, de manière instantanée, cette composition étant en outre facile à préparer et économique.

Un autre objectif essentiel de l'invention est de proposer un procédé de production à basse température, de revêtements silicones réticulés anti-adhérents et/ou hydrofuges, sur supports souples thermosensibles.

Ces objectifs, parmi d'autres, sont atteints par la présente invention qui concerne en premier lieu une nouvelle utilisation à titre de réticulant, dans une composition silicone susceptible de réticuler par polyaddition, pour former un revêtement, hydrofuge et anti-adhérent pour support fibreux ou non,

→d'au moins une huile silicone:

comprenant au moins un PolyOrganoSiloxane (POS) (de préférence linéaire) hydrogéné présentant, par molécule, au moins trois atomes d'hydrogène liés au silicium, et de formule linéaire moyenne suivante:

$$M_{\alpha}\, M'_{\beta}\, D_{\gamma}\, D'_{\delta}$$

avec avec

M = $(R^1)_3SiO_{1/2}$
M'= $H_a(R^1)_bSiO_{1/2}$, a+b=3, a=1,2 ou 3, b=0 à 3
D = $(R^2)_2SiO_{2/2}$
D'= $HR^3SiO_{2/2}$
$0\leq\alpha\leq2$
$0<\beta\leq2$
$0<\gamma$
$0<\delta$
avec $R^1$, $R^2$ et $R^3$ = un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,

et avec:

➥ $0<\gamma/\delta$, de préférence $0<\gamma/\delta\leq1,8$,
et plus préférentiellement encore $0<\gamma/\delta\leq1,5$;
➥ $15\leq(\beta/\delta)\times1000\leq150$, de préférence $15\leq(\beta/\delta)\times1000\leq80$
et plus préférentiellement encore $15\leq(\beta/\delta)\times1000\leq60$;

le ou les POS de plus forte viscosité de ladite composition ayant une viscosité dynamique $\eta$ à 25°C inférieure ou égale à 1500 mPa.s.

L'utilisation selon l'invention de réticulants POS ≡SiH judicieusement sélectionnés permet de réaliser des revêtements anti-adhérents sur des supports thermosensibles tels que le polyéthylène (PE) . Grâce à l'invention une réticulation correcte du revêtement est assurée à une température basse de 90°C par exemple, et ce dans des conditions industrielles d'enduction.

Par ailleurs, ces nouveaux réticulants POS ≡SiH ne modifient pas le comportement rhéologique de la composition silicone, de sorte qu'elle est parfaitement apte à être enduite sur tout support et notamment sur tout support souple.

Cette dernière propriété est d'autant plus intéressante que, dans le cadre de l'invention, les compositions silicones d'enduction peuvent avantageusement être "sans solvant". Cela signifie qu'elles sont exemptes de solvant et, en particulier, sans solvant organique. On conçoit aisément les avantages que cela procure s'agissant de l'hygiène et de la sécurité.

Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.

La formule du réticulant POS ≡SiH indiqué ci-dessus est une formule globale qui couvre :

♦ -a- les cas où le réticulant POS ≡SiH comprend les motifs M M'D D' sur une même molécule POS (de préférence linéaire), le réticulant pouvant comprendre une ou plusieurs molécules M M'D D' différentes,
♦ -b- les cas où le réticulant POS ≡SiH est formé par un mélange de molécules POS (de préférence linéaires) porteuses chacune d'une partie des motifs M M'D D',
♦ -c- les cas où le réticulant POS ≡SiH est formé par un mélange de réticulants POS ≡SiH (de préférence linéaires) de types-a- et -b-, tels que décrits ci-dessus.

A titre d'exemples de réticulants POS ≡SiH de typ-b-, on peut citer les mélanges de POS ≡SiH comprenant des motifs M et D' et de POS comprenant des motifs M,D et D' ou des mélanges de POS ≡SiH comprenant des motifs M et D et de POS comprenant des motifs M',D et D', ou des mélanges de POS ≡SiH comprenant des motifs M et D' et de POS comprenant des motifs M et D, ou des mélanges de POS ≡SiH comprenant des motifs M' et D' et de POS comprenant des motifs M et D.

De préférence, la composition silicone impliquée dans l'utilisation selon l'invention est constituée de POS ≡SiH et de POS ≡Si-alcényle (e.g. Vi), de structure linéaire -éventuellement ramifiée-, à l'exclusion de POS ≡SiH et de POS ≡Si-alcényle (e.g. Vi) ayant une structure réticulée en réseau.

Selon une modalité avantageuse de l'invention, le support destiné à être revêtu est en matériau thermosensible, de préférence souple, et, plus préférentiellement encore choisi parmi les supports souples comportant du polyéthylène et/ou du polyéthylène téréphtalate et/ou du polypropylène et/ou du polychlorure de vinyle et/ou les supports souples imprimables thermiquement ; les films en polyéthylène et les papiers couchés avec du polyéthylène étant tout spécialement préférés.

Selon l'invention, pour la réticulation du revêtement, le support enduit avec la composition silicone polyaddition est placé à une température inférieure ou égale à 110°C, de préférence inférieure ou égale à 100°C, et, plus préférentiellement encore comprise entre 75 et 95°C, pendant moins de 60 secondes, de préférence moins de 10 secondes. Avantageusement, la composition silicone est un mélange formé de :

(I.1) au moins un POS présentant, par molécule, au moins deux groupes alcényles (de préférence en $C_2$-$C_6$) liés au silicium,

(1.2) au moins un POS $\equiv$SiH réticulant tel que défini ci-dessus,

(1.3) et/ou au moins un POS porteur de motifs Si-alcényle et Si-H,

(II) au moins un catalyseur (II) composé d'au moins un métal appartenant au groupe du platine.

De préférence, on utilise au moins un POS (I.1) de type Si alcényle, par exemple Si-Vi, et au moins un POS (I.2) de type Si-H.

Le POS (I.1) et pondéralement l'un des constituants essentiels de la formulation.

Avantageusement, ce POS (I.1) est un produit comprenant des motifs de formule:

$$W_a Z_b SiO_{\frac{4-(a+b)}{2}} \qquad (I.1)$$

dans laquelle :

- W est un groupe alcényle, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3.

Il est avantageux que ce polydiorganosiloxane ait une viscosité (à 25° C) au moins égale à 10 mPa.s, de préférence comprise entre 50 et 1.000 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Le polyorganosiloxane (I.1) peut présenter une structure linéaire, ramifiée ou cyclique. Son degré de polymérisation est, de préférence, compris entre 2 et 5 000.

Des exemples de motifs siloxyle de formule (I.1) sont le motif vinyldiméthylsiloxane, le motif vinylphénylméthylsiloxane et le motif vinylsiloxane.

Des exemples de polyorganosiloxanes (I.1) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Le polyorganosiloxane (1.2) est de préférence du type de ceux comportant des motifs siloxyle de formule :

$$H_d L_e SiO_{\frac{4-(d+e)}{2}} \qquad (I.2)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- d est 1 ou 2, e est 0, 1 ou 2, d + e a une valeur comprise entre 1 et 3.

La viscosité dynamique $\eta_d$ (à 25° C) de ce polyorganosiloxane (1.2) $\geq$ à 5 de préférence à 10 et, plus préférentiellement encore, est comprise entre 20 et 1000 mPa.s.

Le polyorganosiloxane (I.2) peut présenter une structure linéaire, ramifiée ou cyclique. Le degré de polymérisation est supérieur ou égal à 2. Plus généralement, il est inférieur à 5 000.

Des exemples de motifs de formule (I.2) sont :

M' : $H(CH_3)_2SiO_{1/2}$, D' : $HCH_3SiO_{2/2}$, D' : $H(C_6H_5)SiO_{2/2}$.

Des exemples de polyorganosiloxane (1.2) sont :

- M'DD' : les diméthylpolysiloxanes à extrémités hydrogénodiméthylsilyle, poly(diméthylsiloxane) (méthylhydrogéno-siloxy) $\alpha,\omega$-diméthylhydrogéno-siloxane,
- MDD' : les copolymères à motifs diméthyl-hydrogénométhylpolysiloxanes (diméthyl) à extrémités triméthylsilyle,
- M'DD' : les copolymères à motifs diméthyl-hydrogénométhylpolysiloxanes à extrémités hydrogénodiméthylsilyle,
- MD' : les hydrogénométhylpolysiloxanes à extrémités triméthylsilyle,
- D'$_4$ : les hydrogénométhylpolysiloxanes cycliques.

Les bases de compositions silicones polyaddition peuvent ne comporter que des polyorganosiloxanes (I.1) et (I.2) linéaires comme, par exemple, celles décrites dans les brevets : US-A-3 220 972, US-A-3 697 473 et US-A-4 340 709.

Les catalyseurs (II) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (II), calculée en poids de platine-métal, est généralement comprise entre 2 et 400 ppm, de préférence entre 5 et 200 ppm basée sur le poids total des polyorganosiloxanes (I.1) et (I.2).

De préférence, le POS réticulant présente un ratio molaire $\equiv$SiH /$\equiv$Sialcényle(Vi), tel que :

$$1,0 \leq \;\equiv\text{SiH} /\equiv\text{Sialcényle(Vi)} \leq 4$$

$$\text{de préférence} \quad 1,4 \leq \;\equiv\text{SiH} /\equiv\text{Sialcényle(Vi)} \leq 3.$$

Il est avantageux que le POS (I.1) soit un polydiorganosiloxane linéaire bloqué à fonctions "Si-alcényle" -de préférence localisées en bout de chaîne-, présentant une viscosité de l'ordre de 100 à 1000 mPas et un taux de fonctions alcényles Ta, exprimé en nombre d'équivalent de fonctions alcényles pour 100g d'huile :

$$0,01 \leq \text{Ta}$$
$$\text{de préférence} \quad 0,015 \leq \text{Ta} \leq 0,04$$
$$\text{et plus préférentiellement encore} \quad 0,015 \leq \text{Ta} \leq 0,1.$$

De même, l'huile utile comme réticulant comprenant au moins un POS à fonctions $\equiv$SiH (I.2) présente -de préférence- une viscosité de l'ordre de 5 à 150 mPas.

Les compositions durcissables complètes sont fluides à température normale ; leur viscosité est généralement de l'ordre de 50 à 500 mPa.s. à 25°C.

Selon une variante, la composition silicone réticulable anti-adhérente renferme :

- au moins un système modulateur d'adhérence ;
- et/ou au moins un agent inhibiteur d'hydrosilylation, de préférence choisi parmi les alcools acétyléniques et/ou les diallylmaléates et leurs dérivés ;
- éventuellement au moins un autre additif choisi parmi les bactéricides, et/ou les agents antigels, et/ou de mouillage, et /ou les anti-mousses et/ou les charges, et/ou les latex synthétiques, et/ou les colorants, et/ou les acidifiants.

Le système modulateur d'adhérence est sélectionné parmi les systèmes connus. Il peut s'agir de ceux décrits dans le brevet français FR-B-2 450 642, le brevet US -B- 3 772 247 ou la demande de brevet européen EP-A-0 601 938. A titre d'exemples, on peut citer les modulateurs à base :

o de 96 à 85 parties en poids d'au moins une résine polyorganosiloxane (A) réactive de type : MD$^{Vi}$Q, MM$^{Vi}$Q, MD$^{Vi}$T, MM$^{Héxényle}$Q, ou MM$^{Allyloxypropyle}$Q,

o de 4 à 15 parties en poids d'au moins une résine (B) non réactive de type: MD'Q, MDD'Q, MDT', MQ, ou MDQ.

Le ralentisseur de la réaction d'addition (inhibiteur de réticulation) peut, quant à lui, être choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

$$R^1\text{-}(R^2)C(OH)\text{-}C \equiv CH$$

formule dans laquelle,

- R$^1$ est un radical alkyle linéaire ou ramifié, ou un radical phényle ;
- R$^2$ est H ou un radical alkyle linéaire ou ramifié, ou un radical phényle ;

les radicaux R$^1$, R$^2$ et l'atome de carbone situé en a de la triple liaison pouvant éventuellement former un cycle ; le nombre total d'atomes de carbone contenu dans R$^1$ et R$^2$ étant d'au moins 5, de préférence de 9 à 20.

Lesdits alcools sont, de préférence, choisis parmi ceux présentant un point d'ébullition supérieur à 250°C. On peut citer à titre d'exemples :

. l'éthynyl-1-cyclohexanol 1 ;
. le méthyl-3 dodécyne-1 ol-3 ;
. le triméthyl-3,7,11 dodécyne-1 ol-3 ;
. le diphényl-1,1 propyne-2 ol-1 ;
. l'éthyl-3 éthyl-6 nonyne-1 ol-3 ;
. le méthyl-3 pentadécyne-1 ol-3.

Ces alcools α-acétyléniques sont des produits du commerce.

Un tel ralentisseur est présent à raison de 3 000 ppm au maximum, de préférence à raison de 100 à 2000 ppm par rapport au poids total des organopolysiloxanes (I.1) et (I.2).

Selon une autre voie de mise en oeuvre différente de celle "sans solvant", la composition se présente sous forme d'émulsion/dispersion aqueuse et comporte alors au moins un tensioactif; et éventuellement au moins un agent de fixation du pH.

L'agent de fixation et de maintien du pH est, de préférence, un système tampon comprenant HCO$_3^-$/CO$_3^{2-}$ et/ou H$_2$PO$_4^-$/HPO$_4^{2-}$. Ainsi, pour obtenir l'effet tampon souhaité, il conviendra d'introduire conformément à l'invention un sel d'HCO$_3^-$ et/ou H$_2$PO$_4^-$ comme par exemple NaHCO$_3$ et/ou Na$_2$CO$_3$ et/ou NaH$_2$PO$_4$ et/ou Na$_2$HPO$_4$. Il va de soi que tout autre sel à contre-anion différent (e.g. K) pourrait convenir. De manière particulièrement préférée, on met en oeuvre en pratique un système tampon constitué par du NaHCO$_3$ que l'on incorpore dans l'émulsion.

Le ou les tensioactifs susceptibles d'être présents dans l'émulsion suivant l'invention à titre d'agent d'émulsification, sont de nature non-ionique ou ionique.

Suivant une disposition intéressante, la proportion d'eau de l'émulsion est supérieure ou égale à 50 % en poids, de préférence supérieure ou égale à 55 % en poids et par exemple en pratique de l'ordre de 55 - 60 % en poids ou bien encore de 85 à 90 % en poids.

Selon un autre de ses objets, l'invention concerne une composition silicone susceptible de réticuler par polyaddition, pour former un revêtement, hydrofuge et anti-adhérent pour support fibreux ou non, caractérisée :

en ce qu'elle comprend :

➤ (I.1) au moins un POS présentant, par molécule, au moins deux groupes alcényles (de préférence en $C_2$-$C_6$) liés au silicium,

➤ (I.2) d'au moins une huile silicone :

comprenant au moins un PolyOrganoSiloxane (POS) linéaire hydrogéné présentant, par molécule, au moins trois atomes d'hydrogène liés au silicium,
et de formule linéaire moyenne suivante:

$$M_\alpha \ M'_\beta \ D_\gamma \ D'_\delta$$

avec

$M = (R^1)_3SiO_{1/2}$
$M' = H_a(R^1)_bSiO_{1/2}$ , a+b=3, a=1,2 ou 3, b=0 à 3
$D = (R^2)_2SiO_{2/2}$
$D' = HR^3SiO_{2/2}$
$0 \leq \alpha \leq 2$
$0 < \beta \leq 2$
$0 < \gamma$
$0 < \delta$

et avec:

➤ $0 < \gamma/\delta$, de préférence $0 < \gamma/\delta \leq 1,8$, et plus préférentiellement encore $0 < \gamma/\delta \leq 1,5$ ;

➤ $15 \leq (\beta/\delta) \times 1000 \leq 150$, de préférence $15 \leq (\beta/\delta) \times 1000 \leq 80$ et plus préférentiellement encore $15 \leq (\beta/\delta) \times 1000 \leq 60$;

➤ au moins un catalyseur (II) composé d'au moins un métal appartenant au groupe du platine;

et en ce que le ou les POS de plus forte viscosité qu'elle contient, a (ont) une viscosité dynamique $\eta$ à 25°C inférieure ou égale à 1500 mPa.s.

Pour définir la composition selon l'invention, il est fait référence aux caractéristiques définies ci-dessus dans le cadre de la description de l'utilisation.

Selon un autre de ses aspects, la présente invention concerne un procédé de préparation d'une composition silicone, utilisable notamment comme base d'enduction pour la réalisation de revêtements anti-adhérents et hydrofuges, cette composition étant du type de celle définie ci-dessus. Selon ce procédé, on mélange au moins une huile POS (I. 1) ≡Si-Vi (de préférence linéaire)avec le réticulant constitué par au moins une huile POS (1.2) ≡Si-H de type MM'DD' et/ou par un mélange d'huiles comprenant des molécules POS (de préférence linéaires) porteuses chacune d'une partie des motifs M M'D D', contenus dans le réticulant. Le catalyseur (II) est également incorporé dans la phase silicone, avec les éventuels autres ingrédients tels que les inhibiteurs de réticulation.

Les moyens et les méthodologies de mélange sont connus de l'homme de l'art, qu'il s'agisse de compositions sans solvant ou d'émulsion.

Ces compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à 70-200°C ; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180°C.

Lesdites compositions peuvent être déposées sur tout matériau ou substrat souple tel que papiers de types divers (supercalendré, couché...), cartons, feuilles de cellulose, feuilles en métal, films de matière plastique (polyester, polyéthylène, polypropylène...) ...

Les quantités de compositions déposées sont de l'ordre de 0,5 à 2 g par $m^2$ de surface à traiter, ce qui correspond au dépôt de couches de l'ordre de 0,5 à 2 $\mu$m.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon un autre de ses aspects, la présente invention concerne un support caractérisé en ce qu'il comporte au moins un revêtement anti-adhérent obtenu :

■ conformément à l'utilisation telle que définie supra,
■ et/ou à partir d'une composition telle que définie supra.

Les exemples suivants sont donnés à titre indicatif et ne peuvent être considérés comme une limite du domaine et de l'esprit de l'invention.

**Description des figures :**

- La figure 1 est une courbe donnant le taux d'extractibles silicones (ES) (%) en fonction de la température du papier (T) en °C :

     - ♦ - essai 1
     - ■ - essai 2
     - ▲ - essai 3
     - ✕ - essai 4

- La figure 2 est une courbe donnant le taux d'extractibles silicones (ES) (%) en fonction du taux (t 1/3) de réticulant POS ≡SiH (I.2.1) dans le réticulant POS ≡SiH (1.2.3) - réticulation à 85°C-.
- La figure 3 est une courbe donnant la force de pelage (FP) en fonction de la vitesse de pelage (VP) à des températures de réticulation de 86 à 95°C.
- La figure 4 montre des histogrammes à :

     ⬚ t=0

     ▥ t= 3 mois et

     ▤ t = 4 mois

     donnant la force de pelage (FP) pour une vitesse d'enduction de 0,3 m/min et des températures de réticulation de 86 à 95°C.

**EXEMPLES :**

L'enduction de silicone sur pilote d'enduction Rotomec à 100 m/min (3.6 s de temps de séjour dans les fours) sur support glassine 9564 et sur OPP CR 30 à différentes températures de fours.
La température de la couche Silicone est mesurée en ligne à l'aide d'une caméra Infra Rouge.
On caractérise le revêtement après enduction et réticulation par les tests suivants :

- Poids du revêtement silicone : On excite à l'aide d'une source radioactive ou un tube de fluo X les atomes de silicium du revêtement et on mesure l'intensité X ré émise par le revêtement. Moyennant un étalonnage on détermine ainsi le poids du revêtement silicone. L'appareillage utilisé a pour référence Lab X1000 commercialisé par la société Oxford.
- Taux d'extractibles (en sortie de machine d'enduction : "in-line" / 4 jours après la réticulation : "off-line") : le test consiste à immerger le revêtement dans du toluène puis à doser par spectrophotométrie d'absorption atomique Perkin Elmer 3100 (APL/AA/T173) ; sur un revêtement en sortie de la machine d'enduction ("in line"). Moyennant un étalonnage, on accède au taux de silicone extractible du revêtement.
- Réticulation : on qualifie le niveau de polymérisation du revêtement en sortie de la machine d'enduction au travers d'un certain nombre de tests métier : "smear" où l'on qualifie le caractère huileux de la surface en passant le doigt sur la surface siliconée. Le test de "rub off" qui caractérise l'accrochage au support. Dans la pratique on frotte avec le doigt sur la surface du revêtement et on note le nombre de passage à partir duquel le revêtement se dégrade/décolle. Une note de 10 (10 passages) est considérée comme acceptable pour l'application.
- Force de décollement : le test utilisé correspond aux normes Finat n°3 et 10 de l'édition n°5 de 1999. Ce test est réalisé 4 jours après la réticulation ("off-line") avec des rubans adhésifs commercialisés sous la marque Tesa® 7475 à 23°C (base acrylique), Tesa® 7476 à 70°C (base caoutchouc).

- Contrôle des performances d'adhérence instantanée sans pression "tack" du PSA après contact avec le revêtement siliconé selon la norme n°9 de la Finat édition n°5 de 1999.

Produits utilisés :

- Huile Vinylée bout de chaîne (I.1) : huile PolyDiMéthylSiloxane vinylée en $\alpha,\omega$ avec 0,022 mole /100g de Vi et de viscosité à 25°C = 200 mPa.s. Cette huile contient 0,15 % d'inhibiteur EthynylCycloHexanol.
- Huile Silicone PDMS Hydrogénée (I.2.1) de structure MD'xDyM avec 1 mole d'hydrogène/100 g.
- Huile (I.2.2) PDMS hydrogénée de structure MD'xM contenant 1,5 mole d'hydrogène pour 100g de structure MD'xM.
- Huile (1.2.3) PDMS hydrogénée de structure M'MD'xDyM'M contenant 0,7 mole d'hydrogène pour 100 g.
- Catalyseur (II) : Pt Karstedt contenant 3000 ppm de Pt, commercialisé sous la marque Silcolease® 11091M par RHODIA SILICONES.

**Les tests et leurs résultats :**

**-A- ESSAIS 1 A 11**

**TABLEAU 1**

| N° Essai | POS (I.1) | POS (I.2.1) | POS (1.2.2) | POS (I.2.3) | Catalyseur (II) | $\gamma/\delta$=D/D' | $\beta/\delta$*1000 = (M'/D')* 1000 | ES (%) |
|---|---|---|---|---|---|---|---|---|
| 1 | 100 | 4,6 | - | - | 4,4 | 1,5 | 0 | 27 |
| 2 | 100 | - | - | 6,9 | 4,5 | 1,2 | 36 | 3,5 |
| 3 | 100 | 2,9 | - | 2,6 | 4,4 | 1,28 | 22,7 | 7,5 |
| 4 | 100 | - | 1,0 | 4,8 | 4,5 | 0,80 | 23,2 | 4,0 |
| 5 | 100 | 1,0 | - | 5,5 | 4,4 | 1,08 | 28 | 4,5 |
| 6 | 100 | 2,3 | - | 3,5 | 4,4 | 0,86 | 17,4 | 7,5 |
| Contreessai 7 | 100 | 3,5 | - | 1,7 | 4,4 | 0,66 | 7,96 | 11,0 |
| 8 | 100 | - | 1,0 | 4,8 | 4,5 | 0,80 | 23,2 | 4,0 |
| 9 | 100 | - | 1,2 | 5,9 | 4,0 | 0,80 | 23,2 | 4,0 |
| 10 | 100 | - | 1,4 | 6,9 | 4,0 | 0,80 | 23,2 | 4,0 |
| 11 | 100 | - | 1,6 | 8,0 | 4,0 | 0,80 | 23,2 | 5,0 |

**1.** *Réactivité*

On mesure le taux d'extractibles en fonction de la température du papier. Les résultats sont donnés dans le tableau 1 et sur la figure 1 annexée qui montre le taux d'extractibles silicones en fonction de la température du support souple en papier pour les essais 1 à 4, la réticulation étant réalisée à une basse température de 85°C.
On voit clairement que le réticulant selon l'invention de structure POS $\equiv$SiH (I.2.3) : M'MD'D (essais 2, 3 et 4) permet d'obtenir les taux d'extractibles les plus faibles, signature d'une meilleure réactivité. On accède grâce à l'invention à des formulations réticulables à basse température : 80 à 85°C.
L'essai 3 qui correspond à un mélange du POS $\equiv$SiH (I.2.1) : MDD' et du POS $\equiv$SiH (I.2.3) : MM'DD' et l'essai 4 qui correspond à (I.2.2) : MD'M + (I.2.3) : MM'DD', montrent sur la figure 1 que la réactivité (qualité de la réticulation à basse température) des mélanges reste très bonne, tout en ayant un gain en accrochage sur le support souple. La figure 2 montre que le taux dans le réticulant en structure autre que MM'DD', par exemple (I.2.1) : MDD', ne doit pas être trop élevé, de préférence inférieur à 30 %

**-B- ESSAIS 12 A 19**

Une nouvelle série de réticulants conformes (essais 13,14,17,19) ou non (contre-essais 12,15,16,18) à l'invention a été évaluée. Les caractéristiques de ces produits ratio $\gamma/\delta$ : D/D' et ($\beta/\delta$ * 1000 = M'/D' * 1000 sont données dans le tableau 2 suivant.

L'huile vinylée utilisée est la I.1 tel que défini ci-dessus, le catalyseur est le catalyseur II tel que défini ci-dessus. Le ratio SiH/SiVi est gardé constant à 1,8 et le taux de taux de Pt est de 100ppm.

**TABLEAU 2**

| Réticulant | Rub off | Extractibles en % | Ratio $\gamma/\delta$= D/D' | $\beta/\delta$*1000 = M'/D'*1000 |
|---|---|---|---|---|
| contre-essai 12 | 10-OK | 10,0 | 0,208 | 7,15 |
| 13 | 10-OK | 4,4 | 0,52 | 21,2 |
| 14 | 10-OK | 3,4 | 1,5 | 57,2 |
| contre-essai 15 | 10-OK | 11,1 | 0 | 26,7 |
| contre-essai 16 | 10-OK | 9,1 | 0 | 10 |
| 17 POS 1-2-1 | 10-OK | 3,2 | 1,25 | 36 |
| contre-essai 18 | 10-OK | 9,9 | 0,31 | 9 |
| 19 | 10-OK | 4 | 0,8 | 23,3 |

Les réticulants conformes à l'invention (essais 13,14,17,19) ont une bonne tenue au test rub off et présentent des taux d'extractibles silicones (ES) inférieurs à 5%, sachant que conformément à l'invention ES < 9-10 %, de préférence ES $\leq$ 7,5 %, et, plus préférentiellement encore ES $\leq$ 5 %.

*2. Force de décollement et vieillissement Tesa 7475 (in-line)*

Les propriétés anti-adhérentes ont été mesurées sur des enductions réalisées à partir d'une formulation silicone contenant un mélange de réticulant POS (1.2.3) ( 82%) / POS (I.2.2) (18%). les profils de pelage obtenus et les stabilités au vieillissement de ces propriétés d'anti-adhérence sont montrés aux figures 3 et 4. Il apparaît que le réticulant POS $\equiv$SiH selon l'invention n'affecte pas ces propriétés d'anti-adhérence, ni leur stabilité dans le temps.

**Revendications**

**1.** Utilisation à titre de réticulant, dans une composition silicone susceptible de réticuler par polyaddition, pour former un revêtement, hydrofuge et anti-adhérent pour support fibreux ou non,

$\rightarrow$d'au moins une huile silicone :

► comprenant au moins un PolyOrganoSiloxane (POS) (de préférence linéaire) hydrogéné présentant, par molécule, au moins trois atomes d'hydrogène liés au silicium,
► et de formule linéaire moyenne suivante :

$$M_\alpha\, M'_\beta\, D_\gamma\, D'_\delta$$

avec

$M = (R^1)_3SiO_{1/2}$
$M' = H_a(R^1)_bSiO_{1/2}$, a+b=3, a=1,2 ou 3, b=0 à 3
$D = (R^2)_2SiO_{2/2}$
$D' = HR^3SiO_{2/2}$
$0 \leq \alpha \leq 2$
$0 < \beta \leq 2$
$0 < \gamma$

$0 < \delta$

avec $R^1$, $R^2$ et $R^3$ = un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle, et avec :

- ✖ $0 < \gamma/\delta$, de préférence $0 < \gamma/\delta \leq 1,8$ et plus préférentiellement encore $0 < \gamma/\delta \leq 1,5$

- ✖ $15 \leq (\beta/\delta) \times 1000 \leq 150$, de préférence $15 \leq (\beta/\delta) \times 1000 \leq 80$ et plus préférentiellement encore $15 \leq (\beta/\delta) \times 1000 \leq 60$

le ou les POS de plus forte viscosité de ladite composition ayant une viscosité dynamique $\eta$ à 25°C inférieure ou égale à 1500 mPa.s.

2. Utilisation selon la revendication 1, **caractérisée en ce que** le support destiné à être revêtu est en matériau thermosensible, de préférence souple, et, plus préférentiellement encore choisi parmi les supports souples comportant du polyéthylène et/ou du polypropylène et/ou du polyester et/ou du polychlorure de vinyle, et/ou les supports souples imprimables thermiquement ; les films en polyéthylène et les papiers couchés avec du polyéthylène étant tout spécialement préférés.

3. Utilisation selon la revendication 1, **caractérisée en ce que** pour la réticulation du revêtement, le support est placé à une température inférieure ou égale à 110°C, de préférence inférieure ou égale à 100°C, et, plus préférentiellement encore comprise entre 75 et 95 °C, pendant moins de 60 secondes, de préférence moins de 10 secondes.

4. Utilisation selon la revendication 1, **caractérisée en ce que** la composition silicone est un mélange formé de :

(I.1) au moins un POS présentant, par molécule, au moins deux groupes alcényles (de préférence en $C_2$-$C_6$) liés au silicium,
(1.2) au moins un POS $\equiv$SiH réticulant tel que défini ci-dessus,
(III) au moins un catalyseur (II) composé d'au moins un métal appartenant au groupe du platine.

5. Utilisation selon la revendication 4, **caractérisée en ce que** le POS réticulant présente un ratio molaire $\equiv$SiH /$\equiv$Sialcényle (Vi), tel que :

$$1,0 \leq \equiv siH /\equiv Sialcényle(Vi) \leq 4$$
$$\text{de préférence} \quad 1,4 \leq \equiv SiH /\equiv Sialcényle(Vi) \leq 3.$$

6. Utilisation selon la revendication 5, **caractérisée en ce que** le POS (I.1) est un produit comprenant des motifs de formule :

$$W_a Z_b SiO_{\frac{4-(a+b)}{2}} \qquad (I.1)$$

dans laquelle :

- W est un groupe alcényles, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3.

7. Utilisation selon l'une quelconque des revendications 1 à 6, **caractérisée en ce que** la composition silicone réticulable anti-adhérente renferme :

   - au moins un système modulateur d'adhérence,
   - et/ou au moins un agent inhibiteur d'hydrosilylation.

8. Utilisation selon l'une quelconque des revendications 1 à 7, **caractérisée en ce que** le POS (I.1) est un polydiorganosiloxane linéaire bloqué à fonctions "Si-alcényle"-de préférence localisées en bout de chaîne-, présentant une viscosité de l'ordre de 100 à 1000 mPas et un taux de fonctions alcényles Ta, exprimé en nombre d'équivalent de fonctions alcényles pour 100g d'huile :

|  |  |
|---|---|
|  | $0,01 \leq Ta$ |
| de préférence | $0,015 \leq Ta \leq 0,04$ |
| et plus préférentiellement encore | $0,015 \leq Ta \leq 0,10$. |

9. Utilisation selon l'une quelconque des revendications 1 à 8, **caractérisée en ce que** l'huile utile comme réticulant comprenant au moins un POS à fonctions $\equiv$SiH (1.2) présente une viscosité de l'ordre de 5 à 150 mPas.

10. Utilisation selon l'une quelconque des revendications 1 à 9, **caractérisée en ce que caractérisée en ce que** la composition se présente sous forme d'émulsion/dispersion aqueuse.

11. Composition silicone susceptible de réticuler par polyaddition, pour former un revêtement, hydrofuge et anti-adhérent pour support fibreux ou non, **caractérisée**

   ► en ce qu'elle comprend :

   * (I.1) au moins un POS présentant, par molécule, au moins deux groupes alcényles (de préférence en $C_2$-$C_6$) liés au silicium,
   * (1.2) d'au moins une huile silicone:

      ► comprenant au moins un PolyOrganoSiloxane (POS) linéaire hydrogéné présentant, par molécule, au moins trois atomes d'hydrogène liés au silicium,
      ► et de formule linéaire moyenne suivante:

$$M_\alpha \, M'_\beta \, D_\gamma \, D'_\delta$$

   avec

   $M = (R^1)_3 SiO_{1/2}$
   $M' = Ha(R^1)_b SiO_{1/2}$, a+b=3, a=1,2 ou 3, b=0 à 3
   $D = (R^2)_2 SiO_{2/2}$
   $D' = HR^3 SiO_{2/2}$
   $0 \leq \alpha \leq 2$
   $0 < \beta \leq 2$
   $0 < \gamma$
   $0 < \delta$

   avec $R^1$, $R^2$ et $R^3$ = un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle, et avec:

   ✖ $0 < \gamma/\delta$, de préférence $0 < \gamma/\delta \leq 1,8$
   et plus préférentiellement encore $0 < \gamma/\delta \leq 1,5$

   ✖ $15 \leq (\beta/\delta) \times 1000 \leq 150$, de préférence $15 \leq (\beta/\delta) \times 1000 \leq 80$

et plus préférentiellement encore $15 \leq (\beta/\delta) \times 1000 \leq 60$

* au moins un catalyseur (II) composé d'au moins un métal appartenant au groupe du platine;

► et en ce que le ou les POS de plus forte viscosité qu'elle contient, a (ont) une viscosité dynamique $\eta$ à 25°C inférieure ou égale à 1500 mPa.s.

12. Composition selon la revendication 11, telle que définie dans l'une quelconque des revendications 1 à 10.

13. Support **caractérisé en ce qu'**il comporte au moins un revêtement anti-adhérent obtenu :

■ conformément à l'utilisation selon l'une quelconque des revendications 1 à 10),
■ et/ou à partir d'une composition selon la revendication 11 ou 12.

**Claims**

1. Use as crosslinking agent, in a silicone composition capable of crosslinking by polyaddition to form a water-repellent and release coating for a fibrous or nonfibrous support,

→ of at least one silicone oil:

► comprising at least one hydrogenated (preferably linear) PolyOrganoSiloxane (POS) exhibiting, per molecule, at least three hydrogen atoms bonded to silicon atoms,
► and having the following mean linear formula:

$$M_\alpha \, M'_\beta \, D_\gamma \, D'_\delta$$

with $M = (R^1)_3 SiO_{1/2}$

$M' = H_a (R^1)_b SiO_{1/2}$ , a+b=3 , a=1, 2 or 3,
b=0 to 3
$D = (R^2)_2 SiO_{2/2}$
$D' = HR^3 SiO_{2/2}$
$0 \leq \alpha \leq 2$
$0 < \beta \leq 2$
$0 < \gamma$
$0 < \delta$

with $R^1$, $R^2$ and $R^3$ = a monovalent hydrocarbon group, which has no unfavourable effect on the activity of the catalyst and which is preferably chosen from alkyl groups having from 1 to 8 carbon atoms inclusive, advantageously from the methyl, ethyl, propyl and 3,3,3-trifluoropropyl groups, and from aryl groups, advantageously from the xylyl, tolyl and phenyl radicals, and with:

✖ $0 < \gamma/\delta$, preferably $0 < \gamma/\delta \leq 1.8$, and more preferably still $0 < \gamma/\delta \leq 1.5$;

✖ $15 \leq (\beta/\delta) \times 1000 \leq 150$, preferably $15 \leq (\beta/\delta) \times 1000 \leq 80$, and more preferably still $15 \leq (\beta/\delta) \times 1000 \leq 60$;

the POS or POSs of higher viscosity of the said composition having a dynamic viscosity $\eta$ at 25°C of less than or equal to 1500 mPa·s.

2. Use according to Claim 1, **characterized in that** the support intended to be coated is made of a heat-sensitive material, preferably a flexible material, and more preferably still is chosen from flexible supports comprising polyethylene and/or polypropylene and/or polyester and/or poly(vinyl chloride) and/or from thermally printable flexible supports; polyethylene films and paper coated with polyethylene being very especially preferred.

3. Use according to Claim 1, **characterized in that**, for the crosslinking of the coating, the support is placed at a temperature of less than or equal to 110°C, preferably of less than or equal to 100°C and more preferably still of between 75 and 95°C, for less than 60 seconds, preferably less than 10 seconds.

4. Use according to Claim 1, **characterized in that** the silicone composition is a mixture formed of:

(I.1) at least one POS exhibiting, per molecule, at least two alkenyl groups (preferably $C_2$-$C_6$ alkenyl groups) bonded to silicon atoms,
(I.2) at least one crosslinking $\equiv$SiH POS as defined above,
(II) at least one catalyst (II) composed of at least one metal belonging to the platinum group.

5. Use according to Claim 4, **characterized in that** the crosslinking POS exhibits an $\equiv$SiH/$\equiv$Si-alkenyl (Vi) molar ratio such that:

$$1.0 \leq \equiv\text{SiH}/\equiv\text{Si-alkenyl (Vi)} \leq 4$$
$$\text{preferably} \quad 1.4 \leq \equiv\text{SiH}/\equiv\text{Si-alkenyl (Vi)} \leq 3.$$

6. Use according to Claim 5, **characterized in that** the POS (I.1) is a product comprising units of formula:

$$W_a Z_b SiO_{\frac{4-(a+b)}{2}} \qquad\qquad (I.1)$$

in which:

- W is an alkenyl group, preferably a vinyl or allyl group,
- Z is a monovalent hydrocarbonaceous group which has no unfavourable effect on the activity of the catalyst and which is preferably chosen from alkyl groups having from 1 to 8 carbon atoms inclusive, advantageously from the methyl, ethyl, propyl and 3,3,3-trifluoropropyl groups, and from aryl groups, advantageously from the xylyl, tolyl and phenyl radicals,
- a is 1 or 2, b is 0, 1 or 2 and a + b is between 1 and 3.

7. Use according to any one of Claims 1 to 6, **characterized in that** the release crosslinkable silicone composition includes:

- at least one adhesion-adjusting system,
- and/or at least one agent for inhibiting hydrosilylation.

8. Use according to any one of Claims 1 to 7, **characterized in that** the POS (I.1) is a blocked linear polydiorganosiloxane comprising "Si-alkenyl" functional groups, preferably located at the chain end, exhibiting a viscosity of the order of 100 to 1000 mPa·s and a level of alkenyl functional groups La, expressed as equivalent number of alkenyl functional groups per 100 g of oil, of:

$$0.010 \leq \text{La}$$
$$\text{preferably} \quad 0.015 \leq \text{La} \leq 0.04$$
$$\text{and more preferably still} \quad 0.015 \leq \text{La} \leq 0.10.$$

9. Use according to any one of Claims 1 to 8, **characterized in that** the oil of use as crosslinking agent comprising at least one POS comprising $\equiv$SiH functional groups (I.2) exhibits a viscosity of the order of 5 to 150 mPa·s.

10. Use according to any one of Claims 1 to 9, **characterized in that** the composition is provided in the form of an aqueous emulsion/dispersion.

**11.** Silicone composition capable of crosslinking by polyaddition to form a water-repellent and release coating for a fibrous or nonfibrous support,
**characterized**:

▶ in that the composition comprises:

✳ (I.1) at least one POS exhibiting, per molecule, at least two alkenyl groups (preferably $C_2$-$C_6$ alkenyl groups) bonded to silicon atoms,

✳ (I.2) at least one silicone oil:

▶ comprising at least one hydrogenated linear PolyOrganoSiloxane (POS) exhibiting, per molecule, at least three hydrogen atoms bonded to silicon atoms,
▶ and having the following mean linear formula:

$$M_\alpha \, M'_\beta \, D_\gamma \, D'_\delta$$

with

$M = (R^1)_3 SiO_{1/2}$
$M' = H_a(R^1)_b SiO_{1/2}$, a+b=3, a=1, 2 or 3, b=0 to 3
$D = (R^2)_2 SiO_{2/2}$
$D' = HR^3 SiO_{2/2}$
$0 \le \alpha \le 2$
$0 < \beta \le 2$
$0 < \gamma$
$0 < \delta$
with $R^1$, $R^2$ and $R^3$ = a monovalent hydrocarbon group, which has no unfavourable effect on the activity of the catalyst and which is preferably chosen from alkyl groups having from 1 to 8 carbon atoms inclusive, advantageously from the methyl, ethyl, propyl and 3,3,3-trifluoropropyl groups, and from aryl groups, advantageously from the xylyl, tolyl and phenyl radicals, and with:

✖ $0 < \gamma/\delta$, preferably $0 < \gamma/\delta \le 1.8$, and more preferably still $0 < \gamma/\delta \le 1.5$;

✖ $15 \le (\beta/\delta) \times 1000 \le 150$, preferably $15 \le (\beta/\delta) \times 1000 \le 80$, and more preferably still $15 \le (\beta/\delta) \times 1000 \le 60$;

✳ at least one catalyst (II) composed of at least one metal belonging to the platinum group;

▶ and in that the POS or POSs of higher viscosity which it comprises has (have) a dynamic viscosity η at 25°C of less than or equal to 1500 mPa·s.

**12.** Composition according to Claim 11, as defined in any one of Claims 1 to 10.

**13.** Support, **characterized in that** it comprises at least one release coating obtained:

■ in accordance with the use according to any one of Claims 1 to 10,
■ and/or from a composition according to Claim 11 or 12.

**Patentansprüche**

**1.** Verwendung als Vernetzungsmittel in einer Silicon-Zusammensetzung, die geeignet ist, durch Polyaddition zu vernetzen, um einen wasserabweisenden und nichthaftenden Überzug für faserförmige oder nicht faserförmige Träger zu bilden,

→ von mindestens einem Siliconöl:

➢ umfassend mindestens ein hydriertes PolyOrganoSiloxan (POS) (vorzugsweise linear), das pro Molekül mindestens drei Wasserstoffatome aufweist, gebunden an das Silicium,
➢ und der folgenden mittleren linearen Formel:

$$M_\alpha \, M'_\beta \, D_\gamma \, D'_\delta$$

mit

$M = (R^1)_3SiO_{1/2}$
$M' = H_a(R^1)_bSiO_{1/2}$, a+b=3, a=1,2 oder 3, b=0 bis 3
$D = (R^2)_2SiO_{2/2}$
$D' = HR^3SiO_{2/2}$
$0 \le \alpha \le 2$
$0 < \beta \le 2$
$0 < \gamma$
$0 < \delta$
mit $R^1$, $R^2$ und $R^3$ = eine monovalente Kohlenwasserstoff-Gruppe, die frei ist von einer ungünstigen Wirkung auf die Aktivität des Katalysators und vorzugsweise ausgewählt wird unter den Gruppen Alkyl mit einschließlich 1 bis 8 Kohlenstoffatomen und vorteilhafterweise unter den Gruppen Methyl, Ethyl, Propyl und 3,3,3-Trifluorpropyl sowie unter den Gruppen Aryl und vorteilhafterweise unter den Resten Xylyl und Tolyl und Phenyl,
und mit:

★ $0 < \gamma/\delta$, vorzugsweise $0 < \gamma/\delta \le 1,8$
und noch mehr bevorzugt $0 < \gamma/\delta \le 1,5$
★ $15 \le (\beta/\delta \times 1000 \le 150$, vorzugsweise
$15 \le (\beta/\delta \times 1000 \le 80$ und noch mehr bevorzugt $15 \le (\beta/\delta \times 1000 \le 60$,

wobei das oder die POS von höherer Viskosität der genannten Zusammensetzung eine dynamische Viskosität η bei 25 °C von unter oder gleich 1500 mPa.s besitzen.

**2.** Verwendung nach Anspruch 1, **dadurch gekennzeichnet, dass** der Träger, der dazu vorgesehen ist, beschichtet zu werden, ein thermosensibles, vorzugsweise weiches Material ist, und noch mehr bevorzugt, ausgewählt wird unter den weichen Trägern, umfassend Polyethylen und/oder Polypropylen und/oder Polyester und/oder Polyvinylchlorid und/oder den thermisch bedruckbaren weichen Trägern; die Filme aus Polyethylen und die Papiere, beschichtet mit Polyethylen, sind ganz besonders bevorzugt.

**3.** Verwendung nach Anspruch 1, **dadurch gekennzeichnet, dass** für die Vernetzung des Überzuges der Träger bei einer Temperatur von unter oder gleich 110 °C, vorzugsweise unter oder gleich 100 °C, und noch mehr bevorzugt zwischen einschließlich 75 und 95 °C, während weniger als 60 Sekunden, vorzugsweise weniger als 10 Sekunden, plaziert wird.

**4.** Verwendung nach Anspruch 1, **dadurch gekennzeichnet, dass** die Silicon-Zusammensetzung eine Mischung ist, gebildet durch:

(I.1) mindestens ein POS, das pro Molekül mindestens zwei Gruppen Alkenyl (vorzugsweise mit 2 bis 6 Kohlenstoffatomen) aufweist, gebunden an das Silicium,
(I.2) mindestens ein vernetzendes POS ≡SiH wie oben definiert,
(III) mindestens einen Katalysator (II), zusammengesetzt aus mindestens einem Metall, das aus der Platingruppe stammt.

**5.** Verwendung nach Anspruch 4, **dadurch gekennzeichnet, dass** das vernetzende POS ein molares Verhältnis ≡SiH/≡Si-alkenyl (Vi) aufweist, wie

$1,0 \le$ ≡SiH/≡Si-alkenyl(Vi) $\le 4$, vorzugsweise
$1,4 \le$ ≡SiH/≡Si-alkenyl(Vi) $\le 3$.

**6.** Verwendung nach Anspruch 5, **dadurch gekennzeichnet, dass** das POS (I.1) ein Produkt ist, umfassend Struktureinheiten der Formel

$$W_a Z_b SiO_{\frac{4-(a+b)}{2}} \qquad (I.1)$$

in der

- W eine Gruppe Alkenyl ist, vorzugsweise Vinyl oder Allyl,
- Z eine monovalente Kohlenwasserstoff-Gruppe ist, die frei ist von einer ungünstigen Wirkung auf die Aktivität des Katalysators und vorzugsweise ausgewählt wird unter den Gruppen Alkyl mit einschließlich 1 bis 8 Kohlenstoffatomen und vorteilhafterweise unter den Gruppen Methyl, Ethyl, Propyl und 3,3,3-Trifluorpropyl sowie unter den Gruppen Aryl und vorteilhafterweise unter den Resten Xylyl und Tolyl und Phenyl,
- a gleich 1 oder 2 ist, b gleich 0, 1 oder 2 ist und a+b zwischen einschließlich 1 und 3 betragen.

7. Verwendung nach irgendeinem der Ansprüche 1 bis 6, **dadurch gekennzeichnet, dass** die nichthaftende vernetzbare Silicon-Zusammensetzungen umfasst:

- mindestens ein System als Modulator der Haftfähigkeit,
- und/oder mindestens ein Mittel zur Inhibierung der Hydrosilylierung

8. Verwendung nach irgendeinem der Ansprüche 1 bis 7, **dadurch gekennzeichnet, dass** das POS (I.1) ein lineares Polydiorganosiloxan ist, blockiert mit Funktionen "Si-alkenyl", vorzugsweise angeordnet am Ende der Kette, das eine Viskosität in der Größenordnung von 100 bis 1000 mPa.s und einen Gehalt an Funktionen Alkenyl Ta aufweist, ausgedrückt in Anzahl von Äquivalenten Funktionen Alkenyl pro 100 g Öl:

$$0,010 \le Ta$$

| | |
|---|---|
| vorzugsweise | $0,015 \le Ta \le 0,04$ |
| und noch mehr bevorzugt | $0,015 \le Ta \le 0,10$ |

9. Verwendung nach irgendeinem der Ansprüche 1 bis 8, **dadurch gekennzeichnet, dass** das als Vernetzungsmittel verwendete Öl mindestens ein POS mit Funktionen $\equiv SiH$ (I.2) umfasst, das eine Viskosität in der Größenordnung von 5 bis 150 mPa.s aufweist.

10. Verwendung nach irgendeinem der Ansprüche 1 bis 9, **dadurch gekennzeichnet, dass** die Zusammensetzung in Form einer wässerigen Emulsion/Dispersion vorliegt.

11. Silicon-Zusammensetzung, die geeignet ist, durch Polyaddition zu vernetzen, um einen wasserabweisenden und nichthaftenden Überzug für faserförmige oder nicht faserförmige Träger zu bilden, **dadurch gekennzeichnet**,

♦ dass sie umfasst:

★ (I.1) mindestens ein POS, das pro Molekül mindestens zwei Gruppen Alkenyl (vorzugsweise mit 2 bis 6 Kohlenstoffatomen) aufweist, gebunden an das Silicium,
★ (I.2) mindestens ein Siliconöl,

➢ umfassend mindestens ein lineares, hydriertes PolyOrganoSiloxan (POS), das pro Molekül mindestens drei Wasserstoffatome aufweist, gebunden an das Silicium,
➢ und der folgenden mittleren linearen Formel:

$$M_\alpha \, M'_\beta \, D_\gamma \, D'_\delta$$

mit

$M = (R^1)_3SiO_{1/2}$
$M' = H_a(R^1)_bSiO_{1/2}'$ a+b=3 , a=1,2 oder 3, b=0 bis 3
$D = (R^2)_2SiO_{2/2}$
$D' = HR^3SiO_{2/2}$
$0 \le \alpha \le 2$
$0 < \beta \le 2$
$0 < \gamma$
$0 < \delta$

mit $R^1$, $R^2$ und $R^3$ = eine monovalente Kohlenwasserstoff-Gruppe, die frei ist von einer ungünstigen Wirkung auf die Aktivität des Katalysators und vorzugsweise ausgewählt wird unter den Gruppen Alkyl mit einschließlich 1 bis 8 Kohlenstoffatomen und vorteilhafterweise unter den Gruppen Methyl, Ethyl, Propyl und 3,3,3-Trifluorpropyl sowie unter den Gruppen Aryl und vorteilhafterweise unter den Resten Xylyl und Tolyl und Phenyl,
und mit:

★ $0 < \gamma/\delta$, vorzugsweise $0 < \gamma/\delta \le 1,8$
und noch mehr bevorzugt $0 < \gamma/\delta \le 1,5$
★ $15 \le (\beta/\delta)$ x $1000 \le 150$, vorzugsweise
$15 \le (\beta/\delta)$ x $1000 \le 80$ und noch mehr bevorzugt $15 \le (\beta/\delta)$ x $1000 \le 60$,
★ mindestens einen Katalysator (II), zusammengesetzt aus mindestens einem Metall, das aus der Platingruppe stammt;

♦ und dadurch, dass das oder die POS von höherer Viskosität, die sie enthält, eine dynamische Viskosität $\eta$ bei 25 °C von unter oder gleich 1500 mPa.s besitzt(en).

12. Zusammensetzung nach Anspruch 11 wie in irgendeinem der Ansprüche 1 bis 10 definiert.

13. Träger, **dadurch gekennzeichnet, dass** er mindestens einen nichthaftenden Überzug umfasst, erhalten

■ in Übereinstimmung mit der Verwendung nach irgendeinem der Ansprüche 1 bis 10,
■ und/oder ausgehend von einer Zusammensetzung nach Anspruch 11 oder 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0523660 A
- US 3220972 A
- US 3697473 A
- US 4340709 A
- US 3159601 A
- US 3159602 A
- EP 0057459 A
- EP 0188978 A
- EP 0190530 A
- US 3419593 A
- US 3715334 A
- US 3377432 A
- US 3814730 A
- FR 2450642 B
- US 3772247 B
- EP 0601938 A
- FR 1528464 B
- FR 2372874 A